(19) Europäisches Patentamt
European Patent Office
Office européen des brevets

(11) **EP 2 504 209 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(51) Int Cl.:
***B60T 8/172*** *(2006.01)*   ***B60W 40/10*** *(2012.01)*
***B60W 40/112*** *(2012.01)*

(21) Anmeldenummer: **10801117.2**

(22) Anmeldetag: **16.11.2010**

(86) Internationale Anmeldenummer:
**PCT/DE2010/001332**

(87) Internationale Veröffentlichungsnummer:
**WO 2011/063785 (03.06.2011 Gazette 2011/22)**

(54) **VERFAHREN ZUR SCHÄTZUNG DES ROLLWINKELS IN EINEM FAHRENDEN FAHRZEUG**

METHOD TO ESTIMATE THE ROLL ANGLE IN A CAR

PROCÉDÉ D'ESTIMATION DE L'ANGLE DE ROULIS DANS UNE VOITURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2009 DE 102009055776**

(43) Veröffentlichungstag der Anmeldung:
**03.10.2012 Patentblatt 2012/40**

(73) Patentinhaber: **Conti Temic Microelectronic GmbH**
**90411 Nürnberg (DE)**

(72) Erfinder: **WALTER, Michael**
**CH-9435 Heerbrugg (CH)**

(56) Entgegenhaltungen:
**EP-A1- 1 783 683      JP-A- 2000 353 300**
**JP-A- 2003 083 742    US-B1- 6 285 393**
**US-B1- 6 963 657**

EP 2 504 209 B1

## Beschreibung

Die Erfindung betrifft ein Verfahren zur Schätzung des Rollwinkels mit einer Kamera in einem fahrenden Fahrzeug und findet z.B. Anwendung in Fahrzeugen, die mit Fahrerassistenzfunktionen ausgestattet sind.

Zu Fahrerassistenzfunktionen zählen beispielsweise Verkehrszeichenerkennung, automatische Lichtsteuerung, Fahrzeug- und Fußgängererkennung, Nachtsichtsysteme, Abstandsregeltempomat (ACC), Einparkhilfe oder -automatik und Spurfindung.

Spurfindungssysteme benötigen die genaue Kenntnis der Einbaulage der Kamera im Fahrzeug, um Spurbreite, Spurablage und den Gierwinkel zu schätzen. Im speziellen sind dies die Höhe, sowie den Roll- (oder Wank-), Nick- und Gierwinkel der Kamera, welche in der Regel durch eine aufwendige Bandende- bzw. Servicekalibrierung ermittelt werden müssen.

Spurfindungssysteme sind zwar in der Lage den Nick- und Gierwinkel zu schätzen, jedoch nur für den Fall, dass der Rollwinkel bekannt ist, da aus Fehlern im Rollwinkel Fehler im Nick- und Gierwinkel resultieren. Der Rollwinkel wird auch als Wankwinkel bezeichnet.

Ein grundlegendes Problem ist, dass auch bei einer sorgfältigen Kalibrierung der Kameraeinbaulage nach dem Einbau in ein Fahrzeug zum einen ein geringer Fehler im Rollwinkel auftreten kann, der dann erhalten bleibt, und zum anderen spätere Änderungen der Einbaulage der Kamera oder beispielsweise eine ungleiche Beladung des Fahrzeugs zu einer Abweichung des Rollwinkels führen können.

Die DE 10 2006 018 978 A1 zeigt ein Verfahren zur Bestimmung des dynamischen Wankwinkels unter Verwendung einer Vorrichtung zur Bestimmung der Gierrate und der spezifischen Wankfedersteifigkeit des Fahrzeugs.

Die US 6285393 B1 zeigt eine Objekterkennungsvorrichtung und ein Objekterkennungsverfahren für eine Fahrzeugkamera, bei dem Kameraeinstellungsparameter aus einem aufgenommenen Bild mittels einer Fluchtpunktanalyse abgeschätzt werden können. Unter bestimmten Bedingungen ist es möglich, einen Rollwinkel zwischen Kamera und Fahrzeug abzuschätzen, weil angenommen wird, dass der Rollwinkel zwischen Fahrzeug und Fahrbahn im Mittel gleich Null ist. Wenn der (mittlere) Rollwinkel zwischen Fahrzeug und Fahrbahn abgeschätzt wurde, kann anschließend unter bestimmten Bedingungen der Rollwinkel zwischen Fahrzeug und Fahrbahn abgeschätzt werden.

Es ist die Aufgabe der hier vorgestellten Erfindung ein Verfahren zur Schätzung des Rollwinkels anzugeben, das in einem fahrenden Fahrzeug eine aktuelle und präzise Rollwinkelschätzung ermöglicht.

Diese Aufgabe ist erfindungsgemäß gelöst durch ein Verfahren gemäß den unabhängigen Patentansprüchen. Vorteilhafte Weiterbildungen sind den Unteransprüchen zu entnehmen.

Es wird ein Verfahren zur Schätzung des Rollwinkels einer Kamera in einem fahrenden Fahrzeug angegeben mit den folgenden Schritten. In Schritt a) wird mit der Kamera eine Bilderfolge von der Fahrzeugumgebung, insbesondere von der vorausliegenden Fahrbahn aufgenommen. In Schritt b) wird aus den Kamerabildern wird mindestens eine Signatur auf der Fahrbahnoberfläche extrahiert, also ihre Form und Position ermittelt und getrackt (verfolgt). Eine Signatur ist eine Struktur auf der Fahrbahnoberfläche, beispielsweise der Anfang oder das Ende einer Markierung auf der Fahrbahn. Aus der veränderten Position der mindestens einen Signatur in einem oder mehreren darauffolgenden Kamerabild(ern) wird in Schritt c) ermittelt, in welche Richtung die Kamera bezüglich des Rollwinkels gedreht ist.

Der Betrag des Rollwinkels wird in Schritt d) geschätzt. Hierzu wird in Schritt d) der Rollwinkel iterativ um einen Korrekturwinkel erhöht oder erniedrigt, bis der Rollwinkel die Drehung der Kamera kompensiert. Bei der iterativen Rollwinkelschätzung wird der Rollwinkel zu Beginn des Verfahrens bevorzugt auf Null geschätzt. Im Laufe des Verfahrens wird der (aktuell geschätzte) Rollwinkel so lange um einen Korrekturwinkel entsprechend der in Schritt c) festgestellten Drehrichtung korrigiert, bis aus der veränderten Position der mindestens einen Signatur in einem oder mehreren darauffolgenden Kamerabild(ern) geschlossen wird, dass der Rollwinkel die Drehung der Kamera hinreichend kompensiert. Eine hinreichende Kompensation kann darin gesehen werden, dass der korrigierte Rollwinkel im Rahmen der Winkelauflösung nicht mehr von Null abweicht (z.B. Abweichung kleiner 0.1° oder 0.5°) Hieraus ergibt sich der absolut geschätzte Rollwinkel als Gesamtkorrekturwert, indem die Anzahl der durchgeführten Korrekturen mit dem vorgegebenen Korrekturwinkel multipliziert wird oder bei variierten Korrekturwinkelwerten als Summe der insgesamt vorgenommenen Korrekturen.

Der Vorteil der Erfindung liegt darin, dass der Rollwinkel im fahrenden Fahrzeug aktuell und präzise geschätzt werden kann. Für das erfindungsgemäße Verfahren wird keine Vorrichtung zur Gierratenbestimmung benötigt. Bei Testläufen konnte eine Rollwinkelabweichung von bis zu sieben Grad durch das Verfahren geschätzt und kompensiert werden.

Der Erfindung liegt die Überlegung zugrunde, dass im Falle eines Rollwinkels von Null alle Punkte innerhalb einer Zeile eines von der Kamera aufgenommenen Bildes, die die Oberfläche der Fahrbahn darstellen, in Weltkoordinaten eine identische Entfernung zur Kamera in der Projektion der Fahrzeuglängsrichtung aufweisen. Diese Überlegung beruht auf der Annahme, dass die Straße im Wesentlichen eben ist. Dies entspricht einer "Flat earth geometry"-Annahme für die Straße. Unter Weltkoordinaten werden hierbei die Koordinaten im realen Raum verstanden, im Gegensatz zu den Bildkoordinaten, die beispielsweise durch Zeilen und Spalten des Kamerabildes gegeben sind. Ein Abbildungsmodell der Kamera gibt an, wie Punkte im realen Raum (Weltkoordinaten) auf das Bild abgebildet werden (Bildkoordinaten). Punkte, deren Bildkoordinaten bekannt sind, können bei Kenntnis eines vollständigen Abbildungsmodells der Kamera auf Objektpunkte in Weltkoordinaten zurückprojiziert werden. Da die Signaturen per Definition auf der Fahrbahnoberfläche liegen können und angenommen wird, dass die Fahrbahnoberfläche eben verläuft, genügt eine einfache Rückprojektion, um die Lage einer Signatur in Weltkoordinaten zu ermitteln. Im Rahmen der Erfindung interessiert insbesondere die Komponente in Fahrzeuglängsrichtung des Abstands zwischen einem Punkt auf der Fahrbahnoberfläche und der Kamera im realen Raum.

Ein Rollwinkel ungleich Null führt dazu, dass Punkte innerhalb einer Zeile eines von der Kamera aufgenommenen Bildes, die die Oberfläche der Fahrbahn darstellen, in Weltkoordinaten eine steigende oder abnehmende Entfernung in der Projektion der Fahrzeuglängsrichtung haben. Sind beispielsweise Fahrbahnpunkte, die im Bild in einer Zeile liegen, im realen Raum von links nach rechts immer weiter entfernt, so ist die Kamera bezogen auf ihre Blickrichtung nach links gedreht.

Um für Bildpunkte die Entfernung in der Projektion der Fahrzeuglängsrichtung zu ermitteln, können insbesondere aus dem optischen Fluss der Bildpunkte die Länge der Flussvektoren analysiert werden. Sind beispielsweise die vertikalen Komponenten der Flussvektoren von Fahrbahnpunkte, die im Bild in einer Zeile liegen, von links nach rechts zunehmend, so ist die Kamera nach rechts gedreht.

Gemäß einer vorteilhaften Ausgestaltung der Erfindung wird in Schritt b) mindestens eine erste Signatur in der linken Bildhälfte und im selben oder einem darauffolgenden Bild mindestens eine zweite Signatur in der rechten Bildhälfte ermittelt und verfolgt. Zudem wird die Fahrzeuggeschwindigkeit zum Zeitpunkt der jeweiligen Aufnahme des Kamerabildes gespeichert. In Schritt c) wird für jede Signatur separat unter Berücksichtigung der jeweiligen Fahrzeuggeschwindigkeit und des Abbildungsmodells mit dem aktuell geschätzten Rollwinkel der Kamera eine Prädiktion des Signaturabstands durchgeführt. Der Signaturabstand wird jeweils in einem darauffolgenden Bild gemessen. Es wird ermittelt, in welche Richtung die Kamera (der Rollwinkel) gedreht ist, indem die Abweichung des prädizierten Signaturabstands mit dem gemessenen Signaturabstand für die erste mit der Abweichung für den Signaturabstand der zweiten Signatur verglichen wird. Der Rollwinkel wird gemäß Schritt d) iterativ geschätzt. Diese Ausgestaltung bietet den Vorteil, dass Fehler der Fahrzeuggeschwindigkeit durch den Vergleich von rechter und linker Signaturabweichung kompensiert werden können. Somit bietet dieses Verfahren ein hohes Maß an Genauigkeit.

In einer bevorzugten Ausführungsform wird in Schritt b) mindestens eine erste Signatur im linken und im selben oder einem darauffolgenden Bild eine zweite Signatur im rechten unteren Bildquadranten ermittelt und verfolgt. Zudem wird die Fahrzeuggeschwindigkeit zum Zeitpunkt der jeweiligen Aufnahme des Kamerabildes gespeichert.

In Schritt c) wird für jede der Signaturen die Änderung der vertikalen Signaturposition im Bild ins Verhältnis gesetzt zur jeweiligen Fahrzeuggeschwindigkeit. Dieses Verhältnis wird für beide Bildhälften verglichen, wobei gefolgert wird, dass die Kamera bezogen auf ihre Blickrichtung in die Richtung der Bildhälfte gedreht ist, in der dieses Verhältnis größer ist.

Der Rollwinkel wird gemäß Schritt d) iterativ geschätzt. Dieses Verfahren bietet den Vorteil, dass sich Fehler in der absoluten Fahrzeuggeschwindigkeit kaum auswirken.

Gegenstand der Erfindung ist zudem eine Vorrichtung zur Schätzung des Rollwinkels e 8a amera in einem fahrenden Fahrzeug mit der Kamera und mit Mitteln zur erfindungsgemäßen Schätzung des Rollwinkels.

Nachfolgend wird die Erfindung anhand von Ausführungsbeispielen und Figuren erläutert.

Fig. 1: Diagramm eines Verfahrens zur Rollwinkelschätzung

Fig. 2: Kamerabild einer Fahrbahn mit Signaturen

Fig. 3: Repräsentation der durch das Kamerabild wiedergegebenen Szene in Vogelperspektive

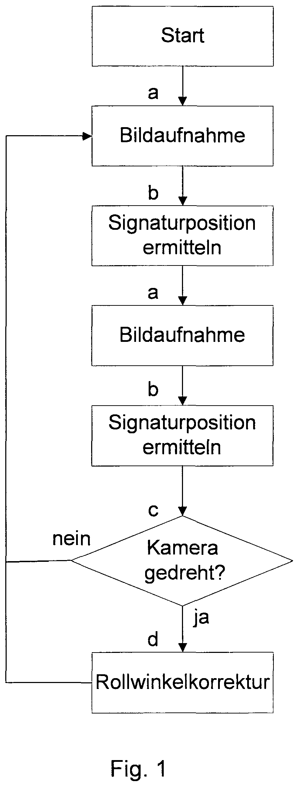

Das Flussdiagramm in Fig. 1 zeigt ein Ausführungsbeispiel eines Verfahrens zur Schätzung des Rollwinkels.

In einem fahrenden Fahrzeug wird in Schritt a) mit einer Kamera (8) ein Bild von der Fahrzeugumgebung aufgenommen, das die vorausliegende Fahrbahn umfasst. In Schritt b) wird aus dem Kamerabild mindestens eine Signatur (S1-S6) auf der Fahrbahnoberfläche ermittelt und deren Position im Bild bestimmt. Eine Signatur (S1-S6) ist eine Struktur auf der Fahrbahnoberfläche, beispielsweise der Anfang (S2, S4) oder das Ende (S3) einer Markierung auf der Fahrbahn. In einem folgenden Schritt a) wird ein weiteres Bild aufgenommen, aus dem die aktuelle Position der Signatur (S1-S6) im Bild ermittelt wird. Aus der veränderten Position der mindestens einen Signatur (S1-S6) wird in Schritt c) ermittelt, ob und in welche Richtung die Kamera (8) bzgl. des Rollwinkels gedreht ist. Ist die Kamera (8) gedreht, wird der Rollwinkel in Schritt d) korrigiert. Die Schätzung des Rollwinkels ergibt sich aus der Summe der Korrekturen in Schritt d).

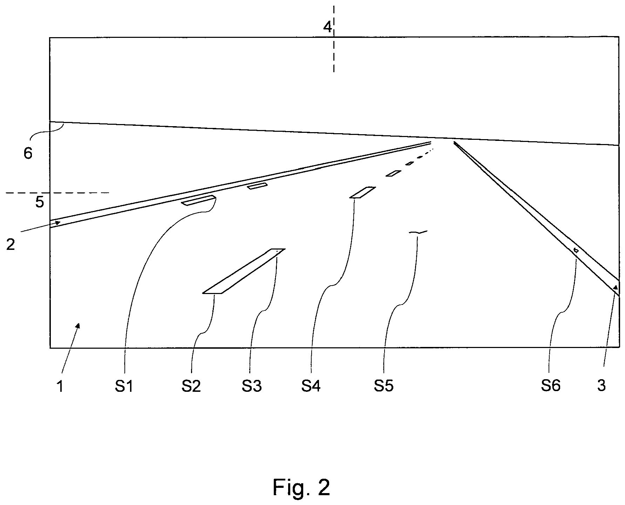

Fig. 2 zeigt beispielhaft ein Kamerabild der Fahrzeugumgebung wie es in Schritt a) aufgenommen wird. Das Fahrzeug fährt auf einer Fahrbahn (1), die durch eine linke (2) und eine rechte (3) durchgehende Fahrbahnmarkierung begrenzt ist. Die Mitte der Fahrbahn (1) ist durch einen gestrichelten Mittelstreifen maskiert. Auf der Fahrbahnoberfläche ist eine Vielzahl von Signaturen zu erkennen. Die Signaturen (S1-S6) sind in der Figur gekennzeichnet. Die Detektion der Signaturen (S1-S6) erfolgt in Schritt b). Die Signatur (S1) ist eine zusätzliche Markierung auf der linken Fahrbahnseite. Die Signaturen (S2) und (S4) bzw. (S3) sind der Anfang bzw. das Ende von Mittelstreifenmarkierungen. Die Signatur (S5) ist ein Riss des Fahrbahnbelags und die Signatur (S6) ist eine Struktur auf der rechten durchgehenden Fahrbahnmarkierung (3), beispielsweise eine Verschmutzung oder ein Loch derselben. Die Hilfslinien (4) und (5) markieren die horizontale bzw. vertikale Bildmitte. Die Bildzeilen und - spalten verlaufen parallel zu den Hilfslinien (5) und (4). Die Tatsache, dass der Horizont (6) nicht horizontal verläuft, liefert dem menschlichen Betrachter einen Hinweis darauf, dass der Rollwinkel unter dem dieses Bild aufgenommen wurde von Null abweicht und die Kamera (8) nach links gedreht ist.

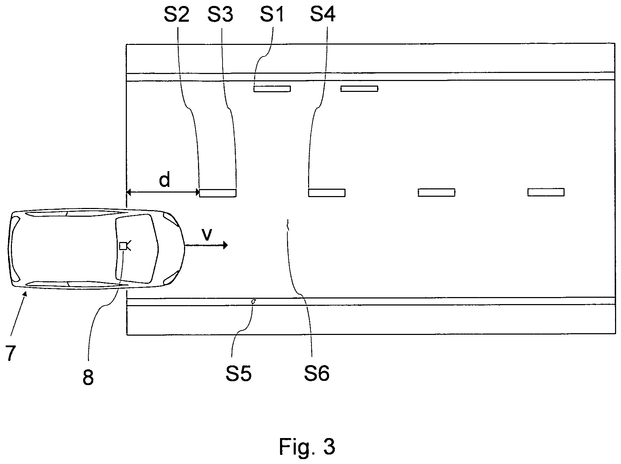

Eine Repräsentation der durch das Kamerabild wiedergegebenen Szene in Vogelperspektive zeigt Fig. 3.

Die Erstellung dieser Repräsentation der durch das Kamerabild wiedergegebenen Szene in Vogelperspektive (birdview bzw. top down view) mit Markierungen und Signaturen (S1-S6) in Weltkoordinaten kann aus den Bildkoordinaten mit einer Schrittweite von z.B. 5cm erfolgen durch eine Rückprojektion, die aus dem Abbildungsmodell der Kamera (8) unter Berücksichtigung des aktuell geschätzten Rollwinkels ermittelt wurde.

Die Signaturen (S1-S6) auf der Fahrbahnoberfläche werden aus dieser Repräsentation extrahiert. Der Abstand (d) einer Signatur (S1-S6) zur Kamera (8) in Richtung der Fahrzeuglängsachse in Weltkoordinaten wird hieraus bestimmt.

Die Position dieser Signatur (S1-S6) in Weltkoordinaten wird für einen späteren Zeitpunkt unter Berücksichtigung der Eigengeschwindigkeit (v) des Fahrzeuges prädiziert. Der spätere Zeitpunkt $\Delta t$ wird dabei so gewählt, dass zu diesem späteren Zeitpunkt $\Delta t$ ein darauffolgendes Bild mit der Kamera (8) aufgenommen wird. Der spätere Zeitpunkt $\Delta t$ ist also um ein Vielfaches des Kehrwerts der Bildfrequenz später (z.B. 40ms) als der Zeitpunkt t=0 der Aufnahme des ersten Bildes (Fig. 2). Das zum späteren Zeitpunkt $\Delta t$ aufgenommene Bild ist nicht dargestellt.

Eine Prädiktion zu einem Zeitpunkt $\Delta t$ für eine Signatur (S1-S6), deren Abstand zur Kamera (8) zum Zeitpunkt t=0 in Weltkoordinaten d_0 beträgt ergibt sich beispielsweise aus:

$$\mathtt{d\_est = d\_0 - v \cdot \Delta t}$$

wobei v die Geschwindigkeit des Fahrzeugs ist, die zum Zeitpunkt t=0 ermittelt wurde.

Der tatsächliche Abstand (d_meas) dieser Signatur (S1-S6) in Weltkoordinaten wird aus der entsprechenden Repräsentation des zu dem späteren Zeitpunkt dt aufgenommenen Bildes gemessen.

Das Verhältnis von gemessenem zu prädiziertem Signaturabstand wird ermittelt: d_meas/d_est.

Auf diese Weise können gemäß einer weiteren Ausführungsform so lange Signaturen in der linken (S1-S3) und in der rechten (S4-S6) Bildhälfte analysiert werden, bis eine ausreichende Zahl N an Prädiktionen und Messungen (z.B. N=10 oder N=50) von Signaturabstandsänderungen zwischen jeweils zwei aufeinanderfolgenden Bildern für die linke (N_links > N) und für die rechte (N_rechts > N) Bildhälfte durchgeführt wurde. Das Verhältnis der prädizierten zu gemessenen Signaturabstände wird für die linke und die rechte Bildhälfte gemittelt (d_meas_links/d_est und d_meas_rechts/d_est). Dann kann eine Aktualisierung des geschätzten Rollwinkelwerts folgendermaßen durchgeführt werden:

- Falls d_meas_links/d_est > d_meas_rechts/d_est, wird der Rollwinkel um einen Korrekturwinkel erhöht.
- Falls d_meas_links/d_est < d_meas_rechts/d_est, wird der Rollwinkel um einen Korrekturwinkel verringert.
- Andernfalls wird der Rollwinkel beibehalten.

Der Korrekturwinkel kann einen vorgegebenen konstanten Wert (z.B. 0.05° oder 0.1°) betragen, der die Auflösung der Rollwinkelschätzung bestimmt, oder der Korrekturwinkel kann einen Wert annehmen, der proportional zum Betrag von (d_meas_links/d_est - d_meas_rechts/d_est) ist.

Durch die Bildung des Verhältnisses von gemessenem (d_meas) zu prädiziertem (d_est) Signaturabstand werden die Einflüsse einer Geschwindigkeitsänderung des Fahrzeugs berücksichtigt.

Bezugszeichen

| | |
|---|---|
| 1 | Fahrbahn |
| 2 | Linke durchgehende Fahrbahnmarkierung |
| 3 | Rechte durchgehende Fahrbahnmarkierung |
| 4 | Horizontale Bildmitte |
| 5 | Vertikale Bildmitte |
| 6 | Horizont |
| 7 | Fahrzeug |
| 8 | Kamera |
| S1-S6 | Signatur 1 bis 6 |
| d | Abstand Signatur zu Kamera in Richtung der Fahrzeuglängsachse in Weltkoordinaten |
| v | Fahrzeuggeschwindigkeit |

Patentansprüche

1. Verfahren zur Schätzung des Rollwinkels einer Kamera in einem fahrenden Fahrzeug (7) mit der Kamera (8) umfassend die folgenden Schritte:

a) mit der Kamera (8) wird eine Bilderfolge von der Fahrzeugumgebung aufgenommen,

b) aus den Kamerabildern wird mindestens eine Signatur (S1-S6) auf der Fahrbahnoberfläche ermittelt und verfolgt (getrackt)

c) aus der veränderten Position der mindestens einen Signatur (S1-S6) in einem oder mehreren darauffolgenden Kamerabild(ern) wird ermittelt, in welche Rollwinkelrichtung die Kamera (8) gedreht ist

d) der Betrag des Rollwinkels wird iterativ um einen Korrekturwinkel korrigiert bis der geschätzte Rollwinkel die Drehung der Kamera (8) hinreichend kompensiert.

2. Verfahren nach Anspruch 1, wobei der Rollwinkel zu Beginn des Verfahrens auf Null geschätzt wird.

3. Verfahren nach Anspruch 1 oder 2, wobei eine hinreichende Kompensation darin gesehen wird, dass der korrigierte Rollwinkel im Rahmen der Winkelauflösung nicht mehr von Null abweicht.

4. Verfahren nach Anspruch 3, wobei eine hinreichende Kompensation darin gesehen wird, dass der korrigierte Rollwinkel weniger als 0,5° von Null abweicht.

5. Verfahren nach Anspruch 3, wobei eine hinreichende Kompensation darin gesehen wird, dass der korrigierte Rollwinkel weniger als 0,1° von Null abweicht.

6. Verfahren nach einem der vorhergehenden Ansprüche, wobei der Korrekturwinkel einen vorgegebenen konstanten Wert beträgt.

7. Verfahren nach einem der Ansprüche 1 bis 5, wobei
in Schritt b) mindestens eine erste Signatur (S1-S3) in der linken Bildhälfte und im selben oder einem darauffolgenden Bild eine zweite Signatur (S4-S6) in der rechten Bildhälfte ermittelt und verfolgt wird, zudem die Fahrzeuggeschwindigkeit (v) zum Zeitpunkt der jeweiligen Aufnahme des Kamerabildes gespeichert wird,
in Schritt c) für jede Signatur (S1-S6) separat unter Berücksichtigung der jeweiligen Fahrzeuggeschwindigkeit (v) und eines Abbildungsmodells der Kamera (8) eine Prädiktion des Signaturabstands (d_est) durchgeführt wird und der Signaturabstand (d_meas) in einem darauffolgenden Bild gemessen wird und
in Schritt d) der Korrekturwinkel einen Wert annimt, der proportional ist zum Betrag von (d_meas_links/d_est - d_meas_rechts/d_est), wobei d_meas_links/d_est das gemittelte Verhältnis der gemessenen zu prädizierten Signaturabstände für die linke Bildhälfte und d_meas_rechts/d_est das gemittelte Verhältnis der gemessenen zu prädizierten Signaturabstände für die rechte Bildhälfte ist.

8. Verfahren nach einem der vorhergehenden Ansprüche, wobei
in Schritt b) mindestens eine erste Signatur (S1-S3) in der linken Bildhälfte und im selben oder einem darauffolgenden Bild eine zweite Signatur (S4-S6) in der rechten Bildhälfte ermittelt und verfolgt wird, zudem die Fahrzeuggeschwindigkeit (v) zum Zeitpunkt der jeweiligen Aufnahme des Kamerabildes gespeichert wird,
in Schritt c) für jede Signatur (S1-S6) separat unter Berücksichtigung der jeweiligen Fahrzeuggeschwindigkeit (v) und eines Abbildungsmodells der Kamera (8) eine Prädiktion des Signaturabstands (d_est) durchgeführt wird und der Signaturabstand (d_meas) in einem darauffolgenden Bild gemessen wird und ermittelt wird, in welche Richtung die Kamera (8) gedreht ist, indem die Abweichung des prädizierten Signaturabstands (d_est) mit dem unter Berücksichtigung des aktuell geschätzten Rollwinkels gemessenen Signaturabstand (d_meas) in beiden Bildhälften verglichen wird.

9. Verfahren nach einem der Ansprüche 1 bis 7, wobei
in Schritt b) mindestens eine erste Signatur (S1-S3) im linken und im selben oder einem darauffolgenden Bild eine zweite Signatur (S4-S6) im rechten unteren Bildquadranten ermittelt und verfolgt wird und zudem die Fahrzeuggeschwindigkeit (v) zum Zeitpunkt der jeweiligen Aufnahme des Kamerabildes gespeichert wird,
in Schritt c) für jede der Signaturen (S1-S6) die Änderung der Signaturposition im Bild ins Verhältnis gesetzt wird zu der jeweiligen Fahrzeuggeschwindigkeit (v) und dieses Verhältnis für beide Bildhälften verglichen wird, wobei gefolgert wird, dass die Kamera (8) in die Richtung der Bildhälfte gedreht ist, in der dieses Verhältnis größer ist.

10. Vorrichtung zur Schätzung des Rollwinkels einer Kamera in einem fahrenden Fahrzeug (7) umfassend die Kamera (8) und eine Auswerteeinheit mit Mitteln zur Schätzung des Rollwinkels nach einem Verfahren der Ansprüche 1 bis 9.

**Claims**

1. A method for estimating the roll angle of a camera in a travelling motor vehicle (7) with the camera (8) comprising the following steps:

a) with the camera (8) an image sequence is recorded of the motor vehicle environment,
b) from the camera images, at least one signature (S1-S6) is determined on the road surface and followed (tracked)
c) from the altered position of the at least one signature (S1-S6) in one or several subsequent camera image(s), it is determined in which roll angle direction the camera (8) is rotated

d) the value of the roll angle is iteratively corrected by a correction angle until the estimated roll angle sufficiently compensates the rotation of the camera (8).

2. The method according to claim 1, wherein at the beginning of the method, the roll angle is estimated as being zero.

3. The method according to claim 1 or 2, wherein it is regarded as being sufficient compensation that the corrected roll angle no longer deviates from zero within the scope of the angle resolution.

4. The method according to claim 3, wherein it is regarded as being sufficient compensation when the corrected roll angle deviates from zero by less than 0.5°.

5. The method according to claim 3, wherein it is regarded as being sufficient compensation when the corrected roll angle deviates from zero by less than 0.1°.

6. The method according to any one of the preceding claims,
wherein the correction angle has a prespecified constant value.

7. The method according to any one of claims 1 to 5, wherein in step b) at least one first signature (S1-S3) in the left-hand image half, and in the same or a subsequent image a second signature (S4-S6) in the right-hand image half, is determined and followed, and additionally, the motor vehicle velocity (v) at the point in time of the respective recording of the camera image is stored,
in step c), a predication of the signature distance (d_est) is made for each signature (S1-S6) separately, taking into account the motor vehicle velocity (v) and an image model of the camera (8), and the signature distance (d_meas) is measured in a subsequent image, and
in step d) the correction angle adopts a value which is proportionate to the total of (d_meas_left/d_est - d_meas_right/d_est), wherein d_meas_left/d_est is the averaged proportion of the measured signature distances to be predicated for the left-hand image half, and d_meas_right/d_est is the averaged proportion of the measured signature distance(s) to be predicated for the right-hand image half.

8. The method according to any one of the preceding claims,
wherein in step b) at least one first signature (S1-S3) in the left-hand image half, and in the same or a subsequent image a second signature (S4-S6) in the right-hand image half is determined and followed, and additionally, the motor vehicle velocity (v) at the point in time of the respective recording of the camera image is stored,
in step c), a predication is made separately for each signature (S1-S6), taking into account the respective motor vehicle velocity (v) and an image model of the camera (8), of the signature distance (d_est), and the signature distance (d_meas) is measured in a subsequent image and it is determined in which direction the camera (8) is rotated by comparing in both halves the deviation between the predicated signature distance (d_est) and the signature distance (d_meas) measured taking into account the current estimated roll angle.

9. The method according to any one of claims 1 to 7, wherein in step b), at least one first signature (S1-S3 in the left-hand lower image quadrant, and in the same or in a subsequent image a second signature (S4-S6) in the right-hand lower image quadrant, is determined and followed, and additionally, the motor vehicle velocity (v) at the point in time of the respective recording of the camera image is stored,
in step c), for each of the signatures (S1-S6) the alteration in the signature position in the image is set in proportion to the respective motor vehicle velocity (v), and this proportion is compared for both image halves, wherein it is inferred that the camera (8) is rotated in the direction of the image half in which this proportion is greater.

10. A device for estimating the roll angle of a camera in a travelling motor vehicle (7), comprising the camera (8) and an evaluation unit with means for estimating the roll angle in accordance with a method according to claims 1 to 9.

**Revendications**

1. Procédé d'estimation de l'angle de roulis d'une caméra dans un véhicule (7) en mouvement avec la caméra (8), comprenant les étapes suivantes :

    a) une séquence d'images de l'environnement du véhicule est enregistrée par la caméra (8),
    b) à partir des images de la caméra, au moins une signature (S1-S6) est déterminée et suivie (pistée) sur la surface de la chaussée,
    c) la direction d'angle de roulis dans laquelle la caméra (8) est tournée est déterminée à partir de la position modifiée de ladite au moins une signature (S1-S6) sur une ou plusieurs image(s) de caméra consécutives,
    d) la valeur de l'angle de roulis est corrigée itérativement d'un angle de correction, jusqu'à ce que l'angle de roulis estimé compense suffisamment la rotation de la caméra (8).

2. Procédé selon la revendication 1, où l'angle de roulis est évalué à zéro au début du procédé.

3. Procédé selon la revendication 1 ou 2, où il est considéré qu'une compensation est suffisante quand l'angle de roulis corrigé ne s'écarte plus du zéro dans le cadre de la résolution d'angle.

4. Procédé selon la revendication 3, où il est considéré qu'une compensation est suffisante quand l'angle de roulis corrigé s'écarte de moins de 0,5° du zéro.

5. Procédé selon la revendication 3, où il est considéré qu'une compensation est suffisante quand l'angle de roulis corrigé s'écarte de moins de 0,1° du zéro.

6. Procédé selon l'une des revendications précédentes, où l'angle de correction a une valeur constante prescrite.

7. Procédé selon l'une des revendications 1 à 5, où, lors de l'étape b), au moins une première signature (S1-S3) est déterminée et suivie dans la moitié d'image gauche, et une deuxième signature (S4-S6) est déterminée et suivie dans la moitié d'image droite dans la même image ou une image suivante, la vitesse de véhicule (v) étant en outre mémorisée au moment de l'enregistrement de l'image de caméra correspondante,
lors de l'étape c), une prédiction de l'écart de signature (d_est) est exécutée séparément pour chaque signature (S1-S6) en tenant compte de la vitesse de véhicule (v) correspondante et d'un modèle de représentation de la caméra (8), et l'écart de signature (d_meas) est mesuré dans une image consécutive, et
lors de l'étape d), l'angle de correction prend une valeur proportionnelle au montant (d_meas_links/d_est-d_meas_rechts/d_est), d_meas_links/d_est étant le rapport moyen entre les écarts de signature à prédire mesurés pour la moitié d'image gauche et d_meas_rechts/d_est le rapport moyen entre les écarts de signature à prédire mesurés pour la moitié d'image droite.

8. Procédé selon l'une des revendications précédentes, où lors de l'étape b), au moins une première signature (S1-S3) est déterminée et suivie dans la moitié d'image gauche et une deuxième signature (S4-S6) est déterminée et suivie dans la moitié d'image droite dans la même image ou une image suivante, la vitesse de véhicule (v) étant en outre mémorisée au moment de l'enregistrement de l'image de caméra correspondante,
lors de l'étape c), une prédiction de l'écart de signature (d_est) est exécutée séparément pour chaque signature (S1-S6) en tenant compte de la vitesse de véhicule (v) correspondante et d'un modèle de représentation de la caméra (8), et l'écart de signature (d_meas) est mesuré dans une image consécutive, et la direction dans laquelle la caméra (8) est tournée est déterminée en comparant la différence entre l'écart de signature (d_est) prédit et l'écart de signature (d_meas) mesuré en tenant compte de l'angle de roulis actuellement estimé dans les deux moitiés d'image.

9. Procédé selon l'une des revendications 1 à 7, où lors de l'étape b), au moins une première signature (S1-S3) est déterminée et suivie dans le quadrant inférieur d'image gauche et une deuxième signature (S4-S6) est déterminée et suivie dans le quadrant inférieur d'image droite dans la même image ou une image suivante, la vitesse de véhicule (v) correspondante étant en outre mémorisée au moment de l'enregistrement de l'image de caméra correspondante, lors de l'étape c), le changement de position de signature dans l'image est mis en rapport avec la vitesse de véhicule (v) correspondante pour chacune des signatures (S1-S6), et ce rapport est comparé pour les deux moitiés d'image, la rotation de la caméra (8) étant suivie dans la direction de la moitié d'image où ce rapport est supérieur.

10. Dispositif pour l'estimation de l'angle de roulis d'une caméra dans un véhicule (7) en mouvement, comprenant la caméra (8) et une unité d'analyse avec des moyens d'estimation de l'angle de roulis suivant un procédé selon les revendications 1 à 9.

Fig. 1

8

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006018978 A1
- US 6285393 B1